# EUROPEAN PATENT APPLICATION

(11) **EP 2 078 587 A1**
(43) Date of publication of application: **15.07.2009**
(21) Application number: 09250039.6
(22) Date of filing: 08.01.2009
(51) Int. Cl.: B23P 6/00, F01D 5/00, B23K 20/02, F01D 11/12

(54) **Dimensional restoration of stationary shroud segments**

(30) Priority: 08.01.2008 US 6954
(71) Applicant: United Technologies Corporation, Hartford, CT 06101 (US)
(72) Inventor: Bischof, Christopher J., Southlake, TX 76092 (US); Hall, Jacob A., Fort Worth, TX 76102 (US); Minor, Michael J., Arlington, TX 76018 (US)
(74) Representative: Tomlinson, Kerry John

(57) **Abstract**

A method for dimensionally restoring a stationary shroud segment (24), the method comprising removing at least a portion of a damaged flowpath of the stationary shroud segment to provide an exposed surface (34), casting a replacement flowpath (40), positioning the replacement flowpath on the exposed surface, and diffusion bonding the replacement flowpath to the stationary shroud segment.

## Description

### BACKGROUND

The present invention relates to dimensional restorations of aerospace components. In particular, the present invention relates to methods of dimensionally restoring stationary shroud segments used in gas turbine engines.

The turbine stage of a gas turbine engine typically includes assemblies of stator vanes and rotatable blades, where each rotatable blade assembly includes multiple airfoil blades disposed radially within a stationary shroud. The stationary shroud is made up of an array of arcuate shroud segments that are circumferentially spaced to form the annular structure. Each shroud segment correspondingly includes a flowpath, which is the radially inner portion of the shroud segment that faces the tips of the airfoil blades. To increase operational efficiencies in a gas turbine engine, it is desirable to minimize the gaps between the tips of the airfoil blades and the flowpaths of the stationary shroud segments. The minimized gaps reduce the amount of combustion gases that flow radially outward of the airfoil blades, thereby directing the combustion gases to flow between the airfoil blades. However, the minimized gaps also subject the flowpaths of the stationary shroud segments to potential wear damage from contact with the rotating airfoil blades. Over extended periods of operation, this wear damage may increase the gaps between the tips of the airfoil blades and the flowpaths, thereby allowing greater amounts of the combustion gases to flow radially outward of the airfoil blades. This gap increase correspondingly reduces operational efficiencies of the gas turbine engine.

Due to economic factors, it is common practice in the aerospace industry to restore stationary shroud segments rather than replace them. However, standard restoration techniques, such as low-pressure plasma spray and thermally-densified coating techniques, typically require minimum substrate thicknesses (e.g., at least about 1.5 millimeters) for the flowpaths to maintain the structural integrity of the shroud segments, and to reduce distortions in the shroud segments. As a result, stationary shroud segments having flowpath substrate thicknesses less than the minimum required thicknesses are unsuitable for such dimensional restoration techniques.

### SUMMARY

The present invention relates to a method for dimensionally restoring a stationary shroud segment having a damaged flowpath. The method includes removing at least a portion of the damaged flowpath to provide an exposed surface, casting a replacement flowpath, positioning the replacement flowpath on the exposed surface, and diffusion bonding the replacement flowpath to the stationary shroud segment.

### BRIEF DESCRIPTION OF THE DRAWINGS

FIG. 1 is a flow diagram of a method for dimensionally restoring a stationary shroud segment.

FIGS. 2-5 are perspective views of a stationary shroud segment, which illustrate an application of the method shown in FIG. 1.

FIG.6 is a perspective view of a second stationary shroud segment having a substrate surface that contains a cavity, and which further illustrates an application of the method shown in FIG. 1.

FIG.7 is a perspective view of a third stationary shroud segment having a substrate surface that contains a ribbed cavity, and which further illustrates an application of the method shown in FIG. 1.

### DETAILED DESCRIPTION

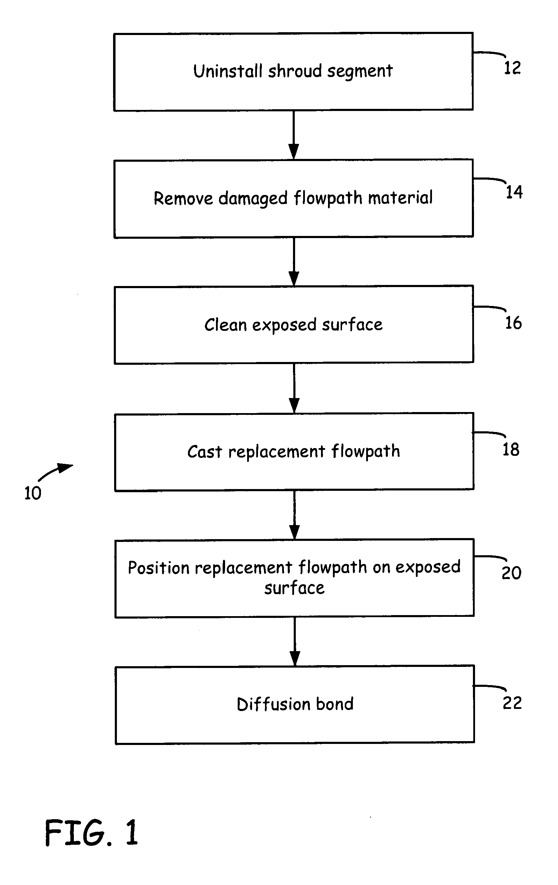

FIG. 1 is a flow diagram of method 10 for dimensionally restoring a stationary shroud segment having a damaged flowpath. As shown, method 10 includes steps 12-22, and initially involves uninstalling the stationary shroud segment from the gas turbine engine (step 12). This involves removing the annular shroud from the gas turbine engine, and separating the stationary shroud segment from the annular shroud. The resulting stationary shroud segment includes a flowpath having damaged material due to abrasive contact with rotating airfoil blades of a gas turbine engine. In addition to abrasive damage, damage to the flowpath material may also occur due to thermal and corrosive conditions.

After the stationary shroud segment is uninstalled, the damaged flowpath material is removed to provide an exposed surface of the stationary shroud segment (step 14). Removal of the damaged flowpath material may result in a substrate thickness that is less than a minimum thickness required to restore the flowpath with standard restoration techniques (e.g., less than about 1.5 millimeters). This is particularly true if the amount of abrasive damage to the flowpath is substantial. However, as discussed below, method 10 is suitable for restoring shroud segment flowpaths regardless of the thicknesses of the substrates after the damaged flowpath material is removed. This increases the numbers of stationary shroud segments that may undergo dimensional restorations rather than requiring replacements.

After the damaged flowpath material is removed, the resulting exposed surface is then cleaned to remove any residual material and oxide layers that may have formed (step 16). A replacement flowpath is then cast to match the dimensions of the damaged flowpath material that was removed (step 18). In alternative embodiments, the replacement flowpath may be cast before the stationary shroud segment is uninstalled (pursuant to step 12), before the damaged flowpath material is removed (pursuant to step 14), and/or before the exposed surface is cleaned (pursuant to step 16). The replacement flowpath is then positioned on the exposed surface (step 20), and is diffusion bonded to the exposed surface (step 22). As discussed below, the diffusion bond process causes the alloy of the replacement flowpath to interdiffuse with the alloy of the shroud substrate. The resulting stationary shroud segment may then undergo one or more post-restoration processing before being reinstalled in the gas turbine engine. For example, the stationary shroud segment may be machined to finish the exterior surfaces, and to form cooling holes through the restored flowpath. Additionally, the stationary shroud segment may also be coated for thermal, corrosion, and abrasion resistance.

As discussed below, method 10 is suitable for dimensionally restoring stationary shroud segments having damaged flowpaths regardless of the resulting substrate thicknesses obtained after the damaged flowpath material is removed. Furthermore, the use of cast replacement flowpaths allows the replacement flowpaths to be formed from the same or similar materials used in the original shroud segment flowpaths (e.g., abradable single crystal alloys). This allows the replacement flowpaths to exhibit similar material properties to the original shroud segment flowpaths.

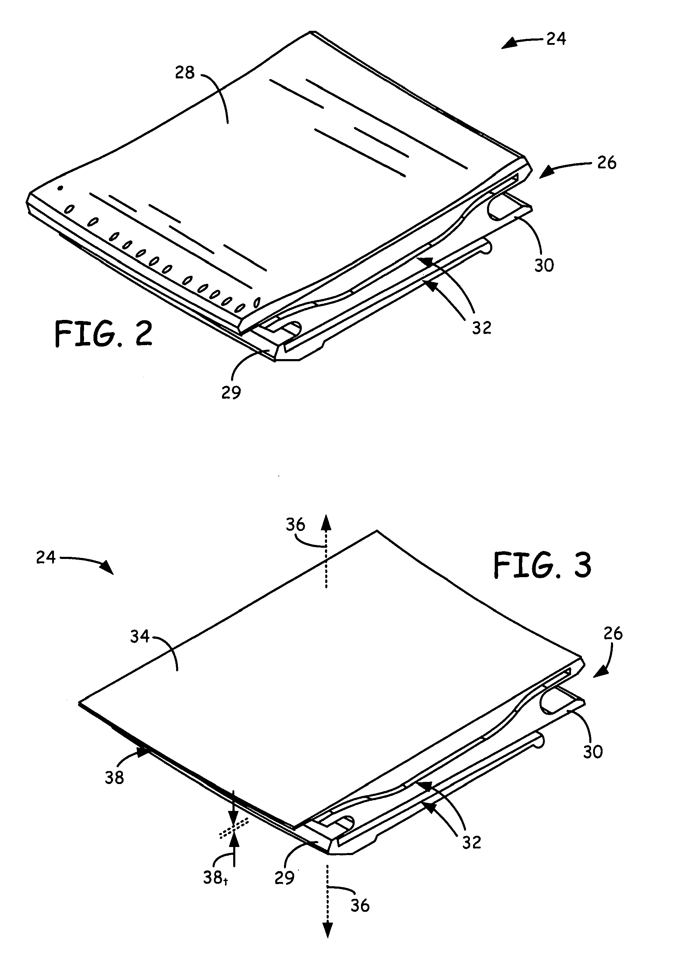

FIGS. 2-5 are perspective views of shroud segment 24, which illustrate the application of method 10 (FIG. 1) for dimensionally restoring shroud segment 24. As shown in FIG. 2, shroud segment 24 is a stationary shroud segment that includes substrate 26 and flowpath 28, where substrate 26 includes front rail 29, rear rail 30, and seal slots 32. Shroud segment 24 is one of a plurality of arcuate stationary shroud segments secured together to form an annular stationary shroud (not shown). Accordingly, shroud segment 24 may be any type of stationary shroud of a gas turbine engine (not shown), and is particularly suitable as a high-pressure turbine (HPT) stationary shroud segment. Front rail 29 and rear rail 30 are retention members that mate with reciprocating hanger sections (not shown) of the gas turbine engine for mounting shroud segment 24. Seal slots 32 are lateral slots configured to receive leaf seals (not shown), thereby sealing the successive stationary shroud segments of the annular stationary shroud.

Flowpath 28 is disposed on substrate 26, and is the portion of shroud segment 24 that faces the rotatable airfoil blades when shroud segment 24 is mounted in the gas turbine engine. Flowpath 28 is desirably formed from one or more abradable single crystal alloys (e.g., nickel and cobalt-based alloys and superalloys). This allows flowpath 28 to withstand the extreme temperatures and pressures that occur during operation of a gas turbine engine, particularly in the HPT stage of a gas turbine engine. Additionally, the abradable nature of the alloy(s) of flowpath 28 allow flowpath 28 to function as a sacrificial layer that is slowly eroded over extended periods of operation. This correspondingly reduces the risk of damaging the tips of the rotatable airfoil blades during operation of the gas turbine engine. In alternative embodiments, flowpath 28 may be formed from one or more non-single crystal alloys, such as cast equiax alloys, cast directionally solidified alloys, and wrought alloys.

Shroud segment 24 is desirably mounted in the gas turbine engine in a manner that reduces the gap between flowpath 28 and the tips of the rotatable airfoil blades. This reduces the combustion gas flow between flowpath 28 and the tips of the rotatable airfoil blades, thereby directing the gas to flow between the rotatable airfoil blades. However, the reduced gap also subjects flowpath 28 to abrasive conditions from contact with the tips of the rotatable airfoil blades. After a given period of operation, the wear damage to flowpath 28 requires a restoration process to restore proper sealing between flowpath 28 and the tips of the rotatable airfoil blades. As a result, pursuant to method 10, shroud segment 24 is initially uninstalled from the gas turbine engine, and is furnished to a proper location to perform the restoration process (step 12).

As shown in FIG. 3, pursuant to step 14 of method 10, the damaged material of flowpath 28 is initially removed from shroud segment 24. Removal of the damaged flowpath material may be performed in a variety of manners, such as machining and grit-blasting processes, where the damaged flowpath material includes the alloy(s) of flowpath 28, as well as any corrosion and oxidation products. In the current example, the removal of the damaged material of flowpath 28 provides exposed surface 34. In alternative examples, the removal of the damaged material may remove greater or lesser amounts of flowpath 28 depending on the amount of wear damage sustained while operating the gas turbine engine.

The removal of the damaged flowpath material correspondingly reduces the thickness of shroud segment 24 along a radial axis (referred to as radial axis 36). As discussed above, one or more portions of shroud segment 24 may have thicknesses along radial axis 36 that are below a minimum required thickness to restore shroud segment 24 with standard restoration techniques (e.g., low-pressure plasma spray and thermally-densified coating techniques). For example, as shown in FIG. 3, substrate 26 includes leading edge portion 38, where leading edge portion 38 has a thickness along radial axis 36 (referred to as thickness 38ₜ) after the damaged material of flowpath 28 is removed. If thickness 38ₜ is less than the minimum required thickness to restore shroud segment 24 with standard restoration techniques (e.g., less than about 1.5 millimeters), shroud segment 24 may not be properly restored with such techniques. However, method 10 is suitable for restoring shroud segment 24 even when one or more portions of shroud segment 24 have thicknesses below this minimum threshold.

After the damaged material is removed, exposed surface 34 is then cleaned to remove any residual damaged material, and to remove any oxide layers disposed on the flowpath portion (step 16). The oxide layers may be removed by cleaning exposed surface 34 with scale-removing treatment chemicals, such as hydrogen fluoride gas. The cleaning process is desirably continued for a sufficient duration to substantially remove any oxide layer from exposed surface 34.

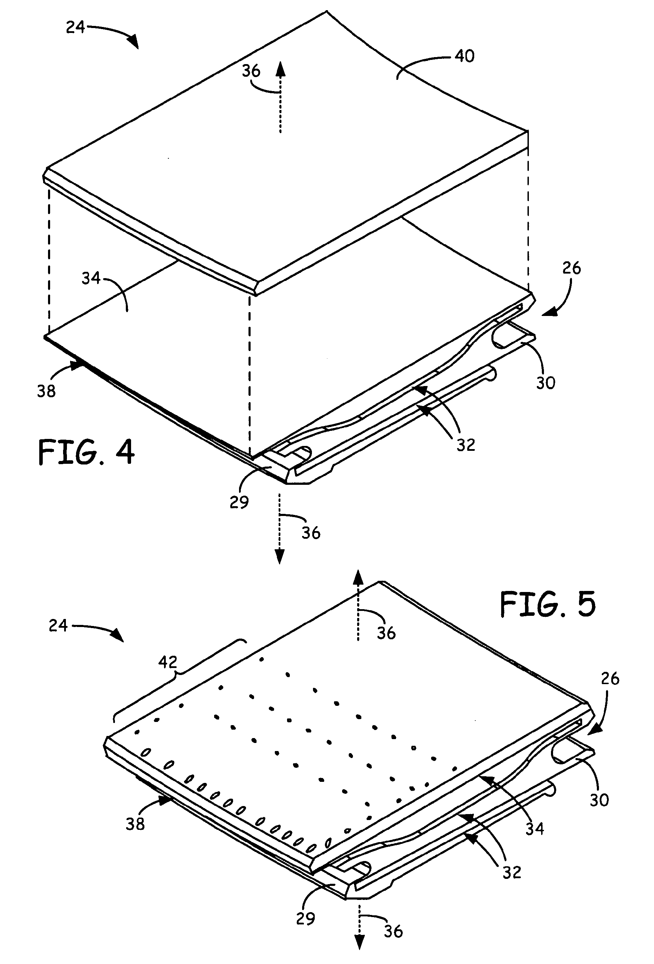

FIG. 4 shows replacement flowpath 40 disposed above exposed surface 34. Pursuant to step 18 of method 10, replacement flowpath 40 is cast to replace the damaged flowpath material that was previously removed. Replacement flowpath 40 desirably matches the dimensions of the removed portion of flowpath 28 (shown in FIG. 2), thereby allowing replacement flowpath 40 to restore shroud segment 24 to its original dimensions. Suitable materials for replacement flowpath 40 include the same materials used to form flowpath 28, such as abradable single crystal alloys, cast equiax alloys, cast directionally solidified alloys, wrought alloys, and combinations thereof. Examples of suitable materials for replacement flowpath 40 include nickel, nickel-based alloys and superalloys, cobalt, cobalt-based alloys and superalloys, and combinations thereof; and may also include one or more additional materials such as carbon, titanium, chromium, niobium, hafnium, tantalum, molybdenum, tungsten, aluminum, and iron. Flowpath 40 may also include one or more materials for oxidation resistance, corrosion resistance, thermal resistance (e.g., ceramic materials), and abradeability. As discussed above, the casting process allows replacement flowpath 40 to exhibit similar material properties to the original flowpath 28.

In one embodiment, replacement flowpath 40 is cast based on specified dimensions, and flowpath 28 is machined down to substantially match the specified dimensions of replacement flowpath 40. This embodiment allows multiple replacement flowpaths (e.g., replacement flowpath 40) to be prefabricated from a single casting mold for restoring multiple stationary shroud segments (e.g., shroud segment 24). This is beneficial for reducing the time required to dimensionally restore multiple stationary shroud segments regardless of the amount of wear damage each of the multiple stationary shroud segments incurs during operation. This reduction in the restoration time correspondingly reduces the amount time that the gas turbine engine is down for repair.

After the casting process, replacement flowpath 40 is then positioned on exposed surface 34 (step 20), and is diffusion bonded to substrate 26 (step 22). The diffusion bonding process involves subjecting substrate 26 and replacement flowpath 40 to one or more heating cycles (e.g., melt and diffusion cycles), thereby causing the alloy of replacement flowpath 40 to interdiffuse with the alloy of substrate 26. The heating cycle(s) are desirably performed under reduced pressure, such as in a vacuum furnace. Examples of suitable reduced pressures include about 1 Torr or less, with particularly suitable pressures including about 0.001 Torr or less. Alternatively, the heating cycle(s) may be performed under partial pressure in an inert-gas atmosphere (e.g., argon gas).

In one embodiment, the heating cycle(s) involve an initial melt cycle to melt the alloys at the interface between substrate 26 and replacement flowpath 40, followed by one or more diffusion cycles. Examples of suitable temperatures for the melt cycle include at least about 1170°C (about 2140°F), with particularly suitable temperatures ranging from about 1200°C (about 2200°F) to about 1260°C (about 2300°F). Examples of suitable durations for the melt cycle range from about fifteen minutes to about two hours, with particularly suitable durations for the melt cycle ranging from about thirty minutes to about one hour. Examples of suitable temperatures for the one or more diffusion cycles range from about 1090°C (about 2000°F) to about 1190°C (about 2165°F), with particularly suitable temperatures ranging from about 1120°C (about 2050°F) to about 1160°C (about 2115°F). Examples of suitable durations for the diffusion cycle(s) range from about one hour to about ten hours, with particularly suitable durations for the diffusion cycle(s) ranging from about two hours to about five hours.

The diffusion bonding process may alternatively be performed pursuant to the method disclosed in EP 1949996. This embodiment is beneficial for reducing the coarsening of the gamma prime (γ') phases of the single crystal alloys of substrate 26 and replacement flowpath 40, which is measurable by increases in the average particle sizes of the γ' phases. This correspondingly preserves the low-temperature (e.g., 815°C-870°C/1500°F-1600°F) creep resistances of the single crystal alloys of substrate 26 and replacement flowpath 40.

As shown in FIG. 5, after the diffusion bonding process, replacement flowpath 40 is interdiffused with substrate 26 at the location of exposed surface 34. The diffusion bonding process is beneficial because it allows replacement flowpath 40 to be bonded to substrate 26 regardless of the thicknesses of shroud segment 24. As such, method 10 may be used to dimensionally restore stationary shroud segments (e.g., shroud segment 24) regardless of the amount of damaged flowpath material removed. Furthermore, the restored flowpaths (e.g., flowpath 40) may be formed from similar materials to the original flowpaths (e.g., single crystal alloys), thereby preserving the material properties of the resulting stationary shroud segments.

After the diffusion bonding process, shroud segment 24 may undergo one or more post-restoration processes. For example, cooling holes 42 may be formed through replacement flowpath 40 to provide coolant air during operation in the gas turbine engine. Restored shroud segment 24 may then be assembled with the additional shroud segments (not shown) to form an annular stationary shroud (not shown) for installation in the gas turbine engine.

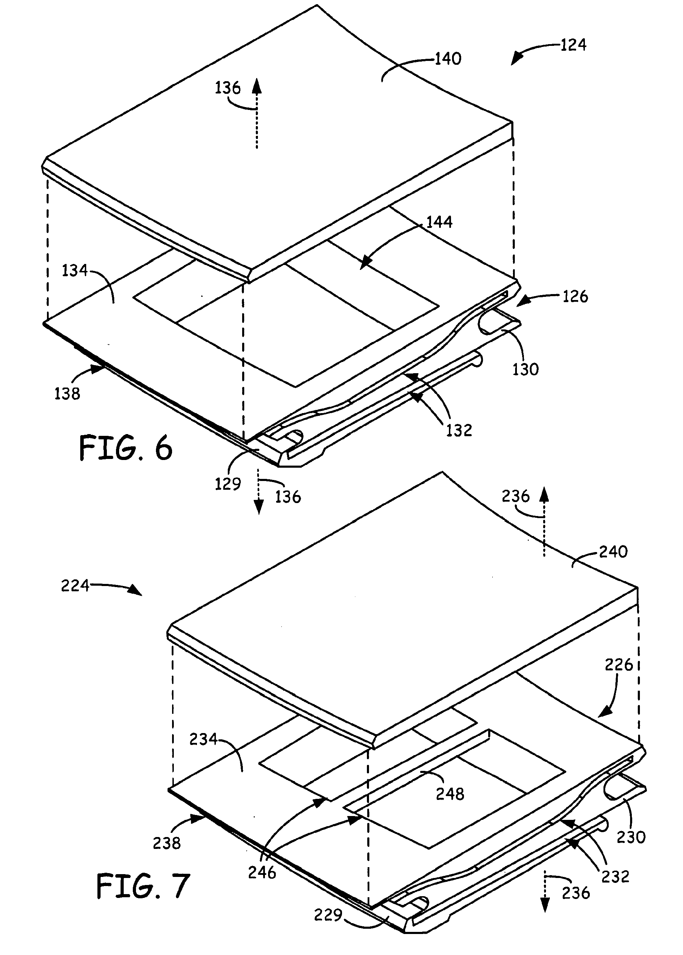

FIG. 6 is a perspective view of shroud segment 124, which further illustrates the application of method 10 (FIG. 1). Shroud segment 124 is similar to shroud segment 24 (shown in FIGS. 2-5), where respective reference labels are increased by "100". Accordingly, shroud segment 124 is a stationary shroud segment that includes substrate 126, where substrate 126 includes front rail 129, rear rail 130, and seal slots 132.

As shown in FIG. 6, shroud segment 124 is undergoing a restoration process pursuant to method 10, where the original flowpath (not shown) has been previously removed pursuant to step 14 of method 10. In this example, however, the removal of the damaged flowpath material completely removes original flowpath. This provides exposed surface 134, which contains cavity region 144. Cavity region 144 is an opening through substrate 126 at exposed surface 134, which provides no underlying support for deposited restoration materials. Thus, standard restoration techniques, such as low-pressure plasma spray and thermally-densified coating techniques, are not suitable for restoring shroud segment 124.

Replacement flowpath 140, however, may be used to restore shroud segment 124. Replacement flowpath 140 is cast from one or more alloys (e.g., abradable single crystal alloys, cast equiax alloys, cast directionally solidified alloys, wrought alloys, and combinations thereof) (step 18), and is then positioned on exposed surface 134 (step 20). As such, replacement flowpath 140 covers cavity region 144. Replacement flowpath 140 is then diffusion bonded to exposed surface 134 (step 22), which causes the alloy(s) of replacement flowpath 140 to interdiffuse with the alloy(s) of substrate 126. This seals off cavity region 144, and dimensionally restores shroud segment 124.

Accordingly, the restoration of shroud segment 124 shown in FIG. 6 illustrates how method 10 may be used to dimensionally restore shroud segments even when portions of the shroud segments provide no underlying support for the replacement flowpaths.

FIG. 7 is a perspective view of shroud segment 224, which further illustrates the application of method 10 (FIG. 1). Shroud segment 224 is also similar to shroud segment 24 (shown in FIGS. 2-5), where respective reference labels are increased by "200". Accordingly, shroud segment 224 is a stationary shroud segment that includes substrate 226, where substrate 226 includes front rail 229, rear rail 230, and seal slots 232.

As shown in FIG. 7, shroud segment 224 is undergoing a restoration process pursuant to method 10, where the original flowpath (not shown) has been previously removed pursuant to step 14 of method 10. In this example, however, the removal of the damaged material also completely removes original flowpath. This provides exposed surface 234, which contains cavity regions 246 bisected with rib member 248. Cavity regions 246 are openings through substrate 226 at exposed surface 234 that provide no underlying support for deposited restoration materials.

In comparison to exposed surface 134 (shown in FIG. 6), exposed surface 234 includes rib member 248, which extends between cavity regions 246 and provides an additional surface for diffusion bonding replacement flowpath 240 to substrate 226. Accordingly, pursuant to step 22 of method 10, replacement flowpath 240 is diffusion bonded to exposed surface 134 (including rib member 248), which causes the alloy(s) of replacement flowpath 240 to interdiffuse with the alloy(s) of substrate 226. This seals off cavity regions 246, and dimensionally restores shroud segment 224. Accordingly, the restoration of shroud segment 224 shown in FIG. 7 further illustrates the application of method 10 to dimensionally restore shroud segments, even when portions of the shroud segments provide no underlying support for the replacement flowpaths.

As discussed above, method 10 (shown in FIG. 1) is suitable for dimensionally restoring a plurality of stationary shroud segments having damaged flowpaths regardless of the resulting substrate thicknesses obtained after the damaged flowpath materials are removed. The embodiments shown in FIGS. 6 and 7 further illustrate that method 10 may be used even when the flowpaths of the shroud segments are completely removed, and the resulting exposed surfaces include cavity regions. Furthermore, the use of cast replacement flowpaths allows the replacement flowpaths to be formed from the same or similar materials used in the original flowpaths (e.g., abradable single crystal alloys). This allows the replacement flowpaths to exhibit similar material properties to the original shroud segment flowpaths.

Although the present invention has been described with reference to preferred embodiments, workers skilled in the art will recognize that changes may be made in form and detail without departing from the scope of the invention, which is defined by the claims and their equivalents.

## Claims

1. A method for dimensionally restoring a stationary shroud segment, the method comprising:
removing at least a portion of a damaged flowpath of the stationary shroud segment, thereby providing an exposed surface of the stationary shroud segment;
casting a replacement flowpath;
positioning the replacement flowpath on the exposed surface; and
diffusion bonding the replacement flowpath to the stationary shroud segment.

2. The method of claim 1, wherein the removed portion of the damaged flowpath is based on specified dimensions, and wherein the replacement flowpath is cast based on the specified dimensions.

3. The method of claim 1 or 2, wherein the diffusion bonding comprises:
heating the replacement flowpath and the stationary shroud segment to a first temperature of at least about 1170°C for a first duration; and
heating the replacement flowpath and the stationary shroud segment to a second temperature ranging from about 1090°C to about 1190°C for a second duration.

4. The method of claim 1, 2 or 3, wherein the diffusion bonding is performed under a pressure of about 1 Torr or less.

5. The method of claim 1, 2, 3 or 4, wherein the replacement flowpath comprises an alloy selected from the group consisting of single crystal alloys, cast equiax alloys, cast directionally solidified alloys, wrought alloys, and combinations thereof.

6. The method of claim 5, wherein the alloy of the replacement flowpath is a single crystal alloy comprising a base material selected from the group consisting of nickel, nickel-based alloys, nickel-based superalloys, cobalt, cobalt-based alloys, cobalt-based superalloys, and combinations thereof.

7. A method for dimensionally restoring a stationary shroud segment having a flowpath disposed on a substrate, the method comprising:
removing damaged material of the flowpath from the substrate, thereby providing an exposed surface of the stationary shroud segment;
casting a replacement flowpath, wherein the replacement flowpath comprises a single crystal alloy;
positioning the replacement flowpath on the exposed surface; and
interdiffusing a portion of the single crystal alloy of the replacement flowpath to an alloy of the substrate.

8. The method of claim 7, wherein interdiffusing the portion of the single crystal alloy of the replacement flowpath to the alloy of the substrate comprises:
heating the replacement flowpath and the substrate to a first temperature of at least about 1170°C for a first duration; and
heating the replacement flowpath and the substrate to a second temperature ranging from about 1090°C to about 1190°C for a second duration.

9. The method of claim 7, wherein the single crystal alloy of the replacement flowpath comprises a base material selected from the group consisting of nickel, nickel-based alloys, nickel-based superalloys, cobalt, cobalt-based alloys, cobalt-based superalloys, and combinations thereof.

10. The method of any preceding claim, further comprising forming a plurality of cooling holes through the replacement flowpath.

11. A repaired stationary shroud segment (24) comprising:
a shroud segment substrate having at least one rail (29, 30) for mounting the dimensionally restored stationary shroud segment in a gas turbine engine, wherein the substrate has a surface (34) provided by a removal of a damaged portion of a flowpath; and
a cast replacement flowpath (40) comprising a single crystal alloy, wherein the cast replacement flowpath is diffusion bonded with the shroud segment substrate at the surface.

12. The repaired stationary shroud segment of claim 11, wherein the single crystal alloy of the replacement flowpath comprises a base material selected from the group consisting of nickel, nickel-based alloys, nickel-based superalloys, cobalt, cobalt-based alloys, cobalt-based superalloys, and combinations thereof.

13. The repaired stationary shroud segment of claim 12, wherein the single crystal alloy of the replacement flowpath further comprises an additional material selected from the group consisting of carbon, titanium, chromium, niobium, hafnium, tantalum, molybdenum, tungsten, aluminum, and iron.

14. The repaired stationary shroud segment of claim 11, 12 or 13, wherein the surface comprises at least one cavity region (144; 246) through the shroud segment substrate.

15. The repaired stationary shroud segment of claim 11, 12, 13 or 14, wherein the cast replacement flowpath comprises a plurality of cooling holes (42).
